# FASCICULE DE BREVET EUROPEEN

(11) **EP 1 288 439 B1**
(45) Date de publication et mention de la délivrance du brevet: **11.01.2006**
(21) Numéro de dépôt: 02292030.0
(22) Date de dépôt: 13.08.2002
(51) Int. Cl.: F01D 5/18

(54) **Circuit de refroidissement pour aube de turbine à gaz**
Kühlfluidführung für ein Gasturbinenschaufelblatt
Cooling fluid flow configuration for a gas turbine blade

(30) Priorité: 28.08.2001 FR 0111188
(43) Date de publication de la demande: 05.03.2003
(73) Titulaire: SNECMA, 75015 Paris (FR)
(72) Inventeur: Bourriaud, Isabelle, 77190 Dammarie-les-Lys (FR); Eneau, Patrice, 77550 Moissy Cramayel (FR); Picot, Philippe, 77820 Le Chatelet-en-Brie (FR)
(74) Mandataire: Joly, Jean-Jacques

(56) Documents cités:
- EP-A- 1 065 343
- WO-A-98/45577
- FR-A- 2 798 422
- US-A- 5 348 446
- US-A- 5 660 524
- US-A- 5 813 835

## Description

### Arrière-plan de l'invention

La présente invention est relative à des perfectionnements apportés aux aubes d'une turbine à gaz d'un moteur d'avion. Plus particulièrement, elle vise le circuit de refroidissement de ces aubes.

Il est connu que les aubes mobiles d'une turbine à gaz d'un moteur d'avion, et notamment de la turbine haute-pression, sont soumises aux températures très élevées des gaz de combustion pendant le fonctionnement du moteur. Ces températures atteignent des valeurs largement supérieures à celles que peuvent supporter sans dommages les différentes pièces qui sont en contact avec ces gaz, ce qui a pour conséquence de limiter leur durée de vie.

Par ailleurs, il est connu qu'une élévation de la température des gaz de la turbine haute-pression permet d'améliorer le rendement d'un moteur, donc le rapport entre la poussée du moteur et le poids d'un avion propulsé par ce moteur. Par conséquent, des efforts sont entrepris afin de réaliser des aubes de turbine qui peuvent résister à des températures de plus en plus élevées.

Afin de résoudre ce problème, il est connu de munir ces aubes de circuits de refroidissement visant à réduire la température de ces dernières. Grâce à de tels circuits, de l'air de refroidissement, qui est généralement introduit dans l'aube par son pied, traverse celle-ci en suivant un trajet formé par des cavités pratiquées dans l'aube avant d'être éjecté par des orifices s'ouvrant à la surface de l'aube.

A titre d'exemple, on connaît du document US 5,813,835 un procédé qui consiste à aménager sur l'aube des circuits de refroidissement comportant chacun des cavités intrados et extrados, une cavité centrale alimentée en air de refroidissement par le pied de l'aube de façon à « impacter » le bord d'attaque de celle-ci. Cependant, comme cette cavité n'est séparée des gaz chauds que par la paroi de l'aube, l'air qui la traverse s'échauffe au fur et à mesure qu'il s'approche du bord d'attaque.

On connaît également des documents US 5,720,431 et EP 1 065 343 une aube munie d'une cavité centrale entourée de cavités radiales situées sur les côtés intrados et extrados de l'aube. Le document US 5,720,431 prévoit en outre des orifices de communication de l'air de refroidissement entre la cavité centrale et les cavités radiales, de sorte que l'air qui traverse ces cavités radiales s'échauffe peu et perd de son efficacité pour protéger le bord d'attaque contre les gaz chauds. Dans la publication EP 1 065 343, les circuits intrados et extrados ne sont pas indépendants l'un de l'autre.

### Objet et résumé de l'invention

La présente invention vise donc à pallier de tels inconvénients en proposant des perfectionnements apportés aux aubes d'une turbine à gaz, et plus particulièrement aux circuits de refroidissement de ces dernières, de manière à limiter la température du bord d'attaque de ces aubes. Ceci a pour conséquence d'augmenter la durée de vie de ces aubes.

A cet effet, il est prévu une aube de turbine à gaz d'un moteur d'avion comprenant les caractéristiques de la revendication 1.

La présence de cavités entourant une cavité centrale de l'aube et l'utilisation de circuits de refroidissement indépendants pour ces différentes cavités permet de protéger l'aube de façon sensiblement uniforme sur toute la hauteur. De la sorte, le bord d'attaque de l'aube bénéficie d'un air de refroidissement plus frais.

En outre, dans la partie centrale de l'aube, le refroidissement de l'extrados et de l'intrados de l'aube est assuré par deux circuits parfaitement indépendants, ce qui permet de contrôler indépendamment le niveau de température de l'aube à l'intrados et à l'extrados par l'intermédiaire du débit traversant chacun de ces deux circuits.

De plus encore, il n'y a aucune circulation radiale d'air dans la cavité située au voisinage du bord d'attaque. L'air de refroidissement est directement évacué dans la veine par des orifices de sortie positionnés au bord d'attaque de l'aube, ce qui permet d'éviter une perturbation de l'effet des jets d'impact par un écoulement cisaillant.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe d'une aube mobile d'une turbine à gaz selon un mode de réalisation de l'invention ;
- la figure 2 est une vue en coupe de la figure 1 selon la direction II - II ;
- la figure 3 est une vue en coupe de la figure 1 selon la direction III - III ;
- la figure 4 est une vue agrandie des orifices d'impact disposés entre la cavité centrale et la cavité bord d'attaque de l'aube selon la présente invention ;
- la figure 5 illustre la circulation de l'air de refroidissement qui est associée aux différents circuits de refroidissement de l'aube de la figure 1.

### Description détaillée d'un mode de réalisation

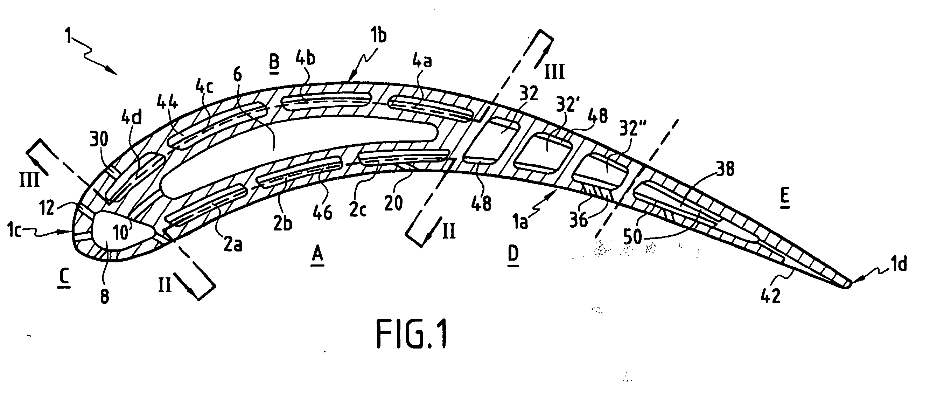

Si on se réfère à la figure 1, on voit que l'aube 1 d'une turbine à gaz d'un moteur pour avion selon un mode de réalisation de l'invention comporte, dans sa partie centrale, un premier et un second circuits de refroidissement (respectivement A et B) indépendants l'un de l'autre. Le premier circuit **A** comporte au moins une cavité intrados, et de préférence plusieurs, par exemple trois cavités intrados 2a, 2b et 2c, s'étendant radialement du côté intrados 1a de l'aube 1. Le deuxième circuit de refroidissement **B** comprend au moins une cavité extrados, et de préférence plusieurs, par exemple quatre cavités extrados 4a à 4d, s'étendant radialement du côté extrados 1b de l'aube.

Ces circuits permettent d'assurer le refroidissement respectivement de l'intrados et de l'extrados de l'aube 1 selon un mode de fonctionnement qui sera détaillé ci-après.

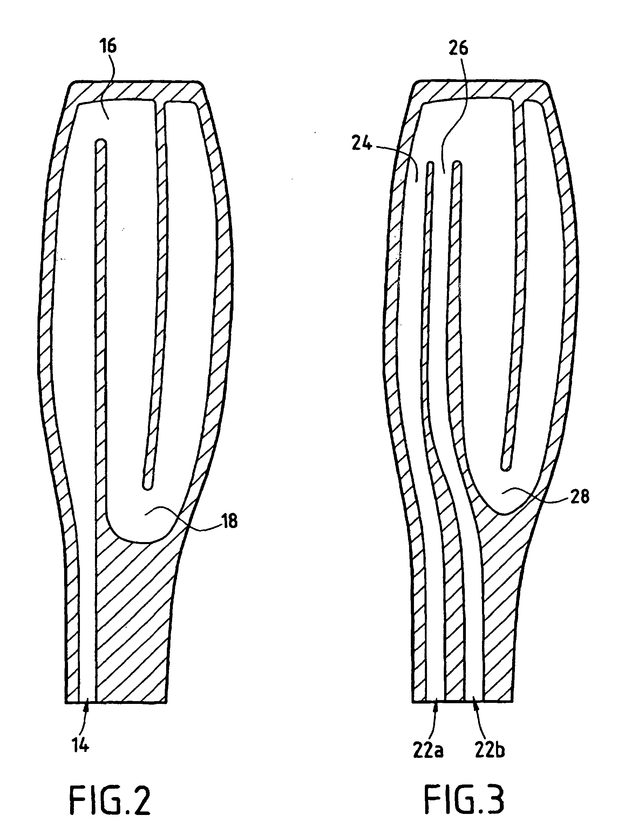

Comme le montre plus précisément la figure 2, une ouverture 14 d'admission d'air est prévue à une extrémité radiale d'une cavité intrados 2a, du côté du pied de l'aube pour alimenter le premier circuit de refroidissement A en air de refroidissement.

Un premier passage 16 fait communiquer l'autre extrémité radiale de la cavité intrados 2a du côté du sommet de l'aube avec une extrémité radiale voisine d'une seconde cavité intrados 2b. Un second passage 18 est également prévu du côté du pied de l'aube pour faire communiquer l'autre extrémité radiale de la cavité intrados 2b avec une extrémité radiale voisine d'une troisième cavité intrados 2c. En outre, des orifices 20 de sortie s'ouvrent dans cette cavité intrados 2c et débouchent sur la face intrados 1a de l'aube.

Avantageusement, les cavités intrados 2a, 2b et 2c de ce premier circuit de refroidissement A comportent des perturbateurs 46 sur leur paroi externe côté intrados de l'aube de manière à accroître les transferts thermiques le long de ces parois tout en réduisant les pertes de charge.

Ces perturbateurs se présentent sous la forme de reliefs positionnés sur les parois des cavités en travers de l'écoulement de l'air de refroidissement. Ils permettent ainsi de perturber l'écoulement de l'air traversant ces cavités et donc d'augmenter les échanges thermiques.

Le deuxième circuit de refroidissement B est indépendant en alimentation du premier circuit A. Comme représenté par la figure 3, il comporte avantageusement quatre cavités extrados 4a, 4b, 4c et 4d et au moins deux ouvertures 22a et 22b d'admission d'air à une extrémité radiale respectivement de deux cavités extrados 4a et 4b, du côté du pied de l'aube.

Par ailleurs, un premier 24 et un second 26 passages font communiquer l'autre extrémité radiale respectivement des cavités 4a et 4b avec une extrémité radiale voisine d'une troisième cavité extrados 4c. Un troisième passage 28 permet de faire communiquer l'autre extrémité radiale de la cavité extrados 4c avec une extrémité radiale voisine de la quatrième cavité extrados 4d.

Enfin, il est également prévu des orifices 30 de sortie s'ouvrant dans cette cavité extrados 4d et débouchant sur la face extrados 1c de l'aube 1, au voisinage du bord d'attaque.

De préférence, les cavités extrados 4a à 4d comportent des perturbateurs 44 sur leur paroi externe côté extrados afin d'améliorer les transferts thermiques le long de ces parois.

Avantageusement, les cavités intrados 2a à 2c du premier circuit de refroidissement A et les cavités extrados 4a à 4d du deuxième circuit B sont à rapport de forme élevé de façon à accroître les transferts thermiques internes. Une cavité de refroidissement est considérée comme ayant un rapport de forme élevé lorsque, en coupe transversale, elle présente une dimension (longueur) au moins trois fois supérieure à l'autre (largeur).

Les refroidissements de l'extrados et de l'intrados de l'aube sont ainsi parfaitement indépendants de par l'utilisation de deux circuits distincts A et B, c'est à dire qui'l n'existe aucune circulation d'air de refroidissement de l'un vers l'autre. Ainsi, il est possible de contrôler indépendamment le niveau de température de l'aube à l'intrados et à l'extrados via le débit d'air traversant chacun de ces deux circuits.

Par ailleurs, l'aube 1 présente également, entre le premier et le second circuits A et B, un troisième circuit de refroidissement C indépendant des deux autres. Ce troisième circuit C se compose notamment d'au moins une cavité centrale 6 située dans la partie centrale de l'aube, entre les cavités intrados 2a à 2c et les cavités extrados 4a à 4d. Une cavité bord d'attaque 8 pourvue de parois lisses et située au voisinage du bord d'attaque 1c de l'aube communique avec la cavité centrale 6 par l'intermédiaire d'orifices 10 de communication. De plus, des orifices 12 de sortie s'ouvrant dans la cavité bord d'attaque 8 et débouchant sur le bord d'attaque de l'aube sont également prévus.

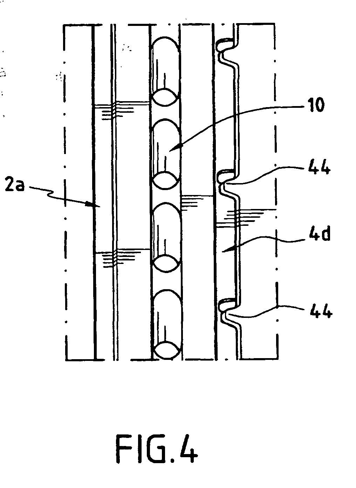

Le refroidissement du bord d'attaque 1c de l'aube est obtenu par des jets d'impact alimentés par la cavité centrale 6. En effet, comme représenté par la figure 4, la cavité centrale 6 et la cavité bord d'attaque 8 communiquent avantageusement entre elles par l'intermédiaire d'orifices oblongs 10 d'impact. Les paramètres dimensionnels (longueur, largeur et rayon) de ces orifices oblongs sont déterminés en fonction des besoins du circuit de manière à optimiser les niveaux d'échanges thermiques issus de l'impact de l'air de refroidissement sur la paroi bord d'attaque 1c. La forme oblongue permet d'éviter les angles vifs et donc d'éliminer les risques de criques lors de la coulée du circuit.

En outre, l'air de refroidissement alimentant la cavité centrale est uniquement émis au bord d'attaque de l'aube au travers des orifices d'impact équipant cette cavité. Le débit traversant ce circuit est ainsi indépendant du champ de pression statique sur la pale de l'aube. La répartition de débit traversant les orifices d'impact est par ailleurs uniforme sur la hauteur.

La cavité centrale 6 est en outre protégée des gaz chauds par son positionnement entre les deux circuits A et B, de sorte que l'air qui la traverse s'échauffe peu ce qui permet de faire bénéficier le bord d'attaque d'un air de refroidissement plus frais.

L'aube selon ce mode de réalisation de l'invention comporte en outre, dans sa partie arrière, un quatrième circuit de refroidissement D. Ce circuit est indépendant des premier, second et troisième circuits de refroidissement A, B et C. Il est constitué d'au moins une cavité, et de préférence plusieurs, par exemple trois cavités 32, 32', 32" situées dans la partie arrière de l'aube 1, d'une ouverture d'admission d'air (non représentée) à une extrémité radiale de la cavité 32, du côté du pied de l'aube, et d'orifices 36 de sortie s'ouvrant dans la cavité 32" et débouchant sur la face intrados 1a de l'aube.

Avantageusement, les cavités 32, 32', 32" du quatrième circuit de refroidissement D comportent des perturbateurs 48 positionnés en vis à vis sur leurs parois côtés intrados et extrados de l'aube de manière à améliorer les transferts thermiques le long de ses parois.

Enfin, il est également prévu un cinquième circuit de refroidissement E indépendant des quatre autres circuits de refroidissement A à D. Ce circuit permet de refroidir le bord de fuite 1d de l'aube 1.

Ce cinquième circuit de refroidissement E comporte au moins une cavité bord de fuite 38 située au voisinage du bord de fuite 1d de l'aube, une ouverture d'admission d'air (non représentée) à une extrémité radiale de la cavité bord de fuite, du côté du pied de l'aube pour alimenter en air de refroidissement ce circuit E, et des orifices 42 de sortie s'ouvrant dans la cavité bord de fuite et débouchant sur le bord de fuite 1d de l'aube.

De préférence, la cavité bord de fuite 38 comporte également des perturbateurs positionnés en vis à vis sur ses parois côtés intrados et extrados de l'aube de manière à améliorer les transferts thermiques le long de ses parois.

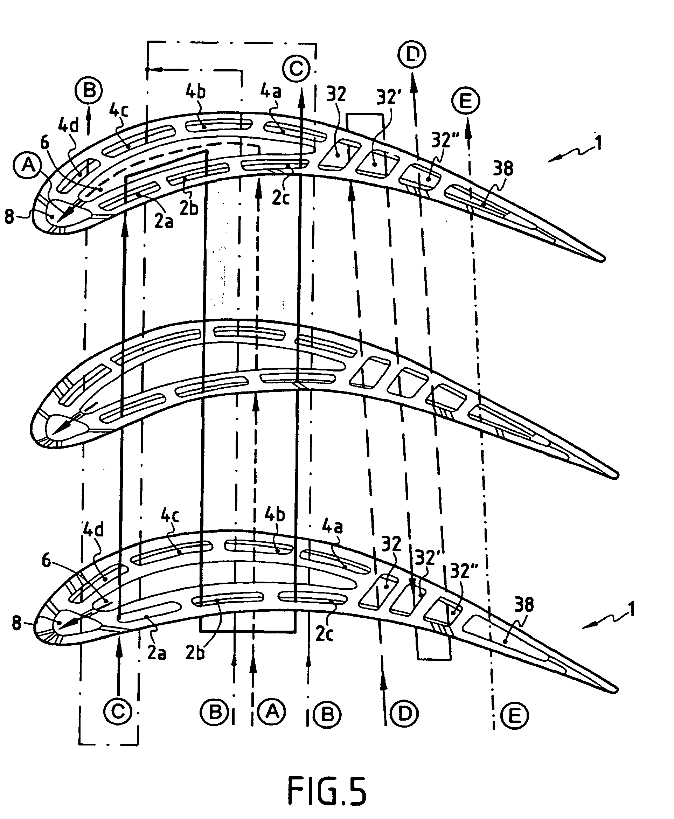

On décrira brièvement le mode de refroidissement de l'aube qui découle de manière évidente de ce qui précède, en se référant plus particulièrement à la figure 5.

Cette figure illustre schématiquement la circulation de l'air de refroidissement qui parcourt les différents circuits de refroidissement A à E de l'aube selon la présente invention. Ces cinq circuits sont indépendants entrer eux puisqu'ils possèdent chacun une alimentation directe en air de refroidissement.

Le premier circuit de refroidissement central A est alimenté en air de refroidissement par la cavité intrados 2a. L'air de refroidissement parcourt ensuite la cavité intrados 2b puis la troisième cavité intrados 2c avant d'être émis à l'intrados de l'aube par les orifices de sortie 20 équipant cette cavité.

Le deuxième circuit de refroidissement B est simultanément alimenté en air de refroidissement par deux cavités extrados 4a et 4b. Un double retournement au niveau du sommet d'aube renvoie cet air dans une cavité descendante 4c. L'air alimente ensuite une cavité montante 4d avant d'être émis à l'extrados 1b de l'aube par les orifices 30 de sortie équipant cette même cavité.

Pour le troisième circuit de refroidissement C, la cavité centrale 6 est directement alimentée par le pied de l'aube et assure l'alimentation de la cavité bord d'attaque 8 par l'intermédiaire des orifices oblongs 10 d'impact. Des orifices 12 de sortie débouchant sur le bord d'attaque 1c de l'aube permettent alors de refroidir ce dernier.

Par ailleurs, la partie arrière de l'aube 1 est refroidie par le quatrième circuit D comportant les trois cavités 32, 32' et 32". Comme le montre la figure 5, l'air de refroidissement alimente une cavité 32, un retournement en sommet d'aube renvoie celui-ci dans la cavité 32', puis l'air alimente la cavité montante 32" avant d'être émis à l'intrados par des orifices 36 de sortie.

Enfin, le bord de fuite 1d de l'aube est refroidi par l'intermédiaire du cinquième circuit de refroidissement E dont la cavité bord de fuite 38 est directement alimentée en air de refroidissement.

La présente invention telle que décrite précédemment comporte de multiples avantages, et notamment la présence de petites cavités ceinturant la cavité centrale permet d'isoler celle-ci des gaz chauds. Dans ces conditions, l'air qui traverse cette cavité s'échauffe beaucoup moins que dans les technologies classiques, et les coupes de tête des aubes bénéficient donc d'air de refroidissement plus frais.

Par ailleurs, la température de la paroi bord d'attaque de l'aube est plus faible, ce qui permet d'assurer une durée de vie plus élevée et une meilleure résistance, à l'oxydation de la paroi métallique d'une part, et à l'écaillage d'une éventuelle barrière thermique d'autre part, dans une zone qui est particulièrement exposée.

Dans les circuits de refroidissement équipant la partie centrale de l'aube, des perturbateurs sont positionnés uniquement sur les faces des cavités côté externe. Ils permettent d'une part d'accroître les transferts thermiques sur ces cloisons et ainsi de réduire les niveaux de température des parois externes de l'aube, et d'autre part de bénéficier d'un niveau de pertes de charge optimisé.

Les points mentionnés précédemment permettent de bénéficier d'un refroidissement du bord d'attaque de l'aube uniforme sur la hauteur de la pale en termes de débit de refroidissement et de niveau de température. La température du métal de la paroi bord d'attaque de l'aube est ainsi plus faible ce qui permet d'assurer une durée de vie de l'aube plus élevée.

Il demeure bien entendu que la présente invention n'est pas limitée aux exemples de réalisation décrits ci-dessus mais qu'elle en englobe toutes les variantes. Notamment, de tels circuits de refroidissement peuvent être installés sur des aubes aussi bien mobiles que fixes.

## Revendications

1. Aube (1) de turbine à gaz d'un moteur d'avion, comportant au moins un premier circuit de refroidissement (A) comprenant au moins une cavité intrados (2) s'étendant radialement du côté intrados (1a) de l'aube, au moins un deuxième circuit de refroidissement (B) indépendant du premier circuit de refroidissement (A) comprenant au moins une cavité extrados (4) s'étendant radialement du côté extrados de l'aube, et au moins un troisième circuit de refroidissement (C) indépendant du premier et du deuxième circuits de refroidissement comprenant au moins une cavité centrale (6) située dans la partie centrale de l'aube entre la cavité intrados (2) et la cavité extrados (4), au moins une cavité bord d'attaque (8) située au voisinage du bord d'attaque (1c) de l'aube, des orifices (10) de communication s'ouvrant dans la cavité centrale et débouchant dans la cavité bord d'attaque, et des orifices (12) de sortie s'ouvrant dans la cavité bord d'attaque et débouchant sur le bord d'attaque (1c) de l'aube, le deuxième circuit de refroidissement (B) comprenant au moins quatre cavités extrados (4a à 4d), au moins deux ouvertures (22a, 22b) d'admission d'air à une extrémité radiale d'une première (4a) et d'une deuxième (4b) cavités extrados pour alimenter le deuxième circuit de refroidissement (B) en air de refroidissement, un premier (24) et un second (26) passages faisant communiquer respectivement l'autre extrémité radiale de la première et de la deuxième cavités extrados avec une extrémité radiale voisine d'une troisième cavité extrados (4c), un troisième passage (28) faisant communiquer l'autre extrémité radiale de la troisième cavité extrados avec une extrémité radiale voisine d'une quatrième cavité extrados (4d), et des orifices (30) de sortie s'ouvrant dans la quatrième cavité extrados et débouchant sur la face extrados (1b) de l'aube.

2. Aube selon la revendication 1, **caractérisée en ce que** le premier circuit de refroidissement (A) comprend au moins trois cavités intrados (2a, 2b, 2c), au moins une ouverture (14) d'admission d'air à une extrémité radiale d'une première cavité intrados (2a) pour alimenter le premier circuit de refroidissement (A) en air de refroidissement, un premier passage (16) faisant communiquer l'autre extrémité radiale de la première cavité intrados avec une extrémité radiale voisine d'une deuxième cavité intrados (2b), un second passage (18) faisant communiquer l'autre extrémité radiale de la deuxième cavité intrados avec une extrémité radiale voisine d'une troisième cavité intrados (2c), et des orifices (20) de sortie s'ouvrant dans la troisième cavité radiale et débouchant sur la face intrados (1a) de l'aube.

3. Aube selon l'une quelconque des revendications précédentes, **caractérisée en ce qu'**elle comporte en outre au moins un quatrième circuit de refroidissement (D) supplémentaire indépendant du premier, deuxième et troisième circuits de refroidissement, comprenant au moins une cavité (32) située dans la partie arrière de l'aube (1), une ouverture d'admission d'air à une extrémité radiale de la cavité (32) pour alimenter le quatrième circuit de refroidissement (D), et des orifices (36) de sortie s'ouvrant dans ladite cavité et débouchant sur la face intrados (1a) de l'aube.

4. Aube selon la revendication 3, **caractérisée en ce que** la cavité (32) du quatrième circuit de refroidissement (D) comporte des perturbateurs (48) positionnés en vis à vis sur ses parois côtés intrados et extrados de l'aube de manière à améliorer les transferts thermiques le long de ses parois.

5. Aube selon l'une quelconque des revendications précédentes, **caractérisée en ce qu'**elle comporte en outre au moins un cinquième circuit de refroidissement (E) supplémentaire indépendant du premier, deuxième, troisième et quatrième circuits de refroidissement, comprenant au moins une cavité (38) située au voisinage du bord de fuite (1d) de l'aube (1), une ouverture d'admission d'air à une extrémité radiale de la cavité bord de fuite pour alimenter le cinquième circuit de refroidissement (E), et des orifices (42) de sortie s'ouvrant dans ladite cavité bord de fuite et débouchant sur le bord de fuite (1d) de l'aube.

6. Aube selon la revendication 5, **caractérisée en ce que** la cavité bord de fuite (38) comporte des perturbateurs (50) positionnés en vis à vis sur ses parois côtés intrados et extrados de l'aube de manière à améliorer les transferts thermiques le long de ses parois.

7. Aube selon l'une quelconque des revendications précédentes, **caractérisée en ce que** la cavité intrados (2) du premier circuit de refroidissement (A) et la cavité extrados (4) du deuxième circuit de refroidissement (B) sont à rapport de forme élevé de manière à accroître les transferts thermiques internes.

8. Aube selon l'une quelconque des revendications précédentes, **caractérisée en ce que** la cavité extrados (4) du deuxième circuit de refroidissement (B) comporte des perturbateurs (44) sur sa paroi externe côté extrados de manière à accroître les transferts thermiques le long de cette paroi.

9. Aube selon l'une quelconque des revendications 2 à 8, **caractérisée en ce que** la cavité intrados (2) du premier circuit de refroidissement (A) comporte des perturbateurs (46) sur sa paroi externe côté intrados de manière à accroître les transferts thermiques le long de ces parois tout en réduisant les pertes de charge.

## Patentansprüche

1. Gasturbinenschaufel (1) eines Flugzeugmotors, umfassend wenigstens einen ersten Kühlkreis (A) mit wenigstens einem unterseitigen Hohlraum (2) der sich radial auf der Unterseite (1a) der Schaufel erstreckt, wenigstens einen von dem ersten Kühlkreis (A) unabhängigen zweiten Kühlkreis (B) mit wenigstens einem oberseitigen Hohlraum (4), der sich radial auf der Oberseite der Schaufel erstreckt, sowie wenigstens einen von dem ersten und von dem zweiten Kühlkreis unabhängigen dritten Kühlkreis (C) mit wenigstens einem zentralen Hohlraum (6), der in dem mittleren Teil der Schaufel zwischen dem unterseitigen Hohlraum (2) und dem oberseitigen Hohlraum (4) gelegen ist, wenigstens einem Vorderkantenhohlraum (8), der in der Nähe der Vorderkante (1c) der Schaufel gelegen ist, Verbindungsöffnungen (10), die sich in den zentralen Hohlraum öffnen und in den Vorderkantenhohlraum münden, sowie Austrittsöffnungen (12), die sich in den Vorderkantenhohlraum öffnen und an der Vorderkante (1c) der Schaufel ausmünden, wobei der zweite Kühlkreis (B) wenigstens vier oberseitige Hohlräume (4a bis 4d), wenigstens zwei Öffnungen (22a, 22b) zum Zuführen von Luft an einem radialen Ende eines ersten oberseitigen Hohlraums (4a) und eines zweiten oberseitigen Hohlraums (4b), um den zweiten Kühlkreis (B) mit Kühlluft zu versorgen, einen ersten Durchgang (24) und einen zweiten Durchgang (26), die jeweils das andere radiale Ende des ersten und des zweiten oberseitigen Hohlraums mit einem benachbarten radialen Ende eines dritten oberseitigen Hohlraums (4c) in Verbindung bringen, einen dritten Durchgang (28), der das andere radiale Ende des dritten oberseitigen Hohlraums mit einem benachbarten radialen Ende eines vierten oberseitigen Hohlraums (4d) in Verbindung bringt, sowie Austrittsöffnungen (30) aufweist, die sich in den vierten oberseitigen Hohlraum öffnen und an der oberseitigen Fläche (1b) der Schaufel ausmünden.

2. Schaufel nach Anspruch 1, **dadurch gekennzeichnet, daß** der erste Kühlkreis (A) wenigstens drei unterseitige Hohlräume (2a, 2b, 2c), wenigstens eine Öffnung (14) zum Zuführen von Luft an einem radialen Ende eines ersten unterseitigen Hohlraums (2a), um den ersten Kühlkreis (A) mit Kühlluft zu versorgen, einen ersten Durchgang (16), der das andere radiale Ende des ersten unterseitigen Hohlraums mit einem benachbarten radialen Ende eines zweiten unterseitigen Hohlraums (2b) in Verbindung bringt, einen zweiten Durchgang (18), der das andere radiale Ende des zweiten unterseitigen Hohlraums mit einem benachbarten radialen Ende eines dritten unterseitigen Hohlraums (2c) in Verbindung bringt, sowie Austrittsöffnungen (20) aufweist, die sich in den dritten radialen Hohlraum öffnen und an der unterseitigen Fläche (1a) der Schaufel ausmünden.

3. Schaufel nach irgendeinem der vorhergehenden Ansprüche, **dadurch gekennzeichnet, daß** sie außerdem wenigstens einen zusätzlichen vierten Kühlkreis (D) umfaßt, der von dem ersten, dem zweiten und dem dritten Kühlkreis unabhängig ist und der wenigstens einen Hohlraum (32), welcher sich in dem hinteren Teil der Schaufel (1) befindet, eine Öffnung zum Zuführen von Luft an einem radialen Ende des Hohlraums (32), um den vierten Kühlkreis (D) zu versorgen, sowie Austrittsöffnungen (36) umfaßt, die sich in den genannten Hohlraum öffnen und an der unterseitigen Fläche (1a) der Schaufel ausmünden.

4. Schaufel nach Anspruch 3, **dadurch gekennzeichnet, daß** der Hohlraum (32) des vierten Kühlkreises (D) Störer (48) aufweist, die an seinen unterseitigen und oberseitigen Wänden der Schaufel gegenüberliegend angeordnet sind, derart, daß die Wärmeübertragungen entlang seiner Wände verbessert werden.

5. Schaufel nach irgendeinem der vorhergehenden Ansprüche, **dadurch gekennzeichnet, daß** sie ferner wenigstens einen zusätzlichen fünften Kühlkreis (E) umfaßt, der von dem ersten, dem zweiten, dem dritten und dem vierten Kühlkreis unabhängig ist und der wenigstens einen Hohlraum (38), welcher sich in der Nähe der Hinterkante (1d) der Schaufel (1) befindet, eine Öffnung zum Zuführen von Luft an einem radialen Ende des Hinterkantenhohlraums, um den fünften Kühlkreis (E) zu versorgen, sowie Austrittsöffnungen (42) umfaßt, die sich in den Hinterkantenhohlraum öffnen und an der Hinterkante (1 d) der Schaufel ausmünden.

6. Schaufel nach Anspruch 5, **dadurch gekennzeichnet, daß** der Hinterkantenhohlraum (38) Störer (50) aufweist, die an seinen unterseitigen und oberseitigen Wänden der Schaufel gegenüberliegend angeordnet sind, derart, daß die Wärmeübertragungen entlang seiner Wände verbessert werden.

7. Schaufel nach irgendeinem der vorhergehenden Ansprüche, **dadurch gekennzeichnet, daß** der unterseitige Hohlraum (2) des ersten Kühlkreises (A) und der oberseitige Hohlraum (4) des zweiten Kühlkreises (B) ein größeres Formverhältnis haben, derart, daß die Innenwärmeübertragungen erhöht werden.

8. Schaufel nach irgendeinem der vorhergehenden Ansprüche, **dadurch gekennzeichnet, daß** der oberseitige Hohlraum (4) des zweiten Kühlkreises (B) Störer (44) an seiner oberseitigen Außenwand aufweist, derart, daß die Wärmeübertragungen entlang dieser Wand erhöht werden.

9. Schaufel nach irgendeinem der Ansprüche 2 bis 8, **dadurch gekennzeichnet, daß** der unterseitige Hohlraum (2) des ersten Kühlkreises (A) Störer (46) an seiner unterseitigen Außenwand aufweist, derart, daß die Wärmeübertragungen entlang dieser Wände erhöht und gleichzeitig die Druckverluste verringert werden.

## Claims

1. A gas turbine blade (1) for an airplane engine, the blade including at least a first cooling circuit (A) comprising at least a concave side cavity (2) extending radially beside the concave face (1a) of the blade, at least a second cooling circuit (B) independent of the first cooling circuit (A) comprising at least one convex side cavity (4) extending radially beside the convex face of the blade, and at least one third cooling circuit (C) independent of the first and second cooling circuits and comprising at least one central cavity (6) situated in the central portion of the blade between the concave side cavity (2) and the convex side cavity (4), at least one leading edge cavity (8) situated in the vicinity of the leading edge (1c) of the blade, communication orifices (10) opening out into the central cavity and into the leading edge cavity, and outlet orifices (12) opening out into the leading edge cavity and through the leading edge (1c) of the blade, with the second cooling circuit (B) comprising at least four convex side cavities (4a to 4d), at least two air admission openings (22a, 22b) at a radial end of first and second convex side cavities (4a, 4b) to feed the second cooling circuit (B) with cooling air, first and second passages (24, 26) putting the respective other radial ends of the first and second convex side cavities respectively into communication with an adjacent radial end of a third convex side cavity (4c), a third passage (28) putting the other radial end of the third convex side cavity into communication with an adjacent radial end of a fourth convex side cavity (4d), and outlet orifices (30) opening out into the fourth convex side cavity and through the convex face (1b) of the blade.

2. The blade according to claim 1, **characterised in that** the first cooling circuit (A) comprises at least three concave side cavities (2a, 2b, 2c), at least one air admission opening (14) at a radial end of a first concave side cavity (2a) for feeding the first cooling circuit (A) with cooling air, a first passage (16) putting the other radial end of the first concave side cavity into communication with an adjacent radial end of a second concave side cavity (2b), a second passage (18) putting the other radial end of the second concave side cavity into communication with an adjacent radial end of a third concave side cavity (2c), and outlet orifices (20) opening out into the third radial cavity and through the concave face (1a) of the blade.

3. The blade according to any one of the preceding claims, **characterised in that** it further comprises at least one additional fourth cooling circuit (D) independent of the first, second, and third cooling circuits, and comprising at least one cavity (32) situated in the rear portion of the blade (1), an air admission opening at a radial end of the cavity (32) for feeding the fourth cooling circuit (D), and outlet orifices (36) opening out into said cavity and through the concave face (1a) of the blade.

4. The blade according to claim 3, **characterised in that** the cavity (32) of the fourth cooling circuit (D) includes baffles (48) positioned facing one another on its concave and convex side walls of the cavity so as to improve heat transfer along its walls.

5. The blade according to any one of the preceding claims, **characterised in that** it further comprises at least one additional, fifth cooling circuit (E) independent of the first, second, third, and fourth cooling circuits, comprising at least one cavity (38) situated in the vicinity of the trailing edge (1d) of the blade (1), an air admission opening at a radial end of the trailing edge cavity to feed the fifth cooling circuit (E), and outlet orifices (42) opening out into said trailing edge cavity and through the trailing edge (1d) of the blade.

6. The blade according to claim 5, **characterised in that** the trailing edge cavity (38) includes baffles (50) positioned facing one another on its concave and convex side walls so as to improve heat transfer along its walls.

7. The blade according to any one of the preceding claims, **characterised in that** the concave side cavity (2) of the first cooling circuit (A) and the convex side cavity (4) of the second cooling circuit (B) are of large aspect ratio so as to increase internal heat transfer.

8. The blade according to any one of the preceding claims, **characterised in that** the convex side cavity (4) of the second cooling circuit (B) includes baffles (44) on its outer convex side wall so as to increase heat transfer along this wall.

9. The blade according to any one of claims 2 to 8, **characterised in that** the concave side cavity (2) of the first cooling circuit (A) includes baffles (46) on its outer wall beside the concave face so as to increase heat transfer along said wall while reducing head losses.
